# EUROPÄISCHE PATENTSCHRIFT

(11) **EP 3 551 438 B1**
(45) Veröffentlichungstag und Bekanntmachung des Hinweises auf die Patenterteilung: **26.08.2020**
(21) Anmeldenummer: 17804175.2
(22) Anmeldetag: 24.11.2017
(51) Int. Cl.: B29C 70/86, B29D 99/00, F03D 1/06, B29L 31/08

(54) **HINTERKANTENGURT EINES ROTORBLATTS EINER WINDENERGIEANLAGE, ROTORBLATT UND VERFAHREN ZUM HERSTELLEN EINES HINTERKANTENGURTS**
TRAILING EDGE SPAR CAP OF A ROTOR BLADE OF A WIND TURBINE, ROTOR BLADE AND METHOD FOR PRODUCING A TRAILING EDGE SPAR CAP
MEMBRURE DE BORD DE FUITE D'UNE PALE DE ROTOR D'UNE INSTALLATION ÉOLIENNE, PALE DE ROTOR ET PROCÉDÉ DE FABRICATION D'UNE MEMBRURE DE BORD DE FUITE

(30) Priorität: 06.12.2016 DE 102016014447
(43) Veröffentlichungstag der Anmeldung: 16.10.2019
(73) Patentinhaber: Senvion GmbH, 22297 Hamburg (DE)
(72) Erfinder: RAMM, Julian, 24105 Kiel (DE)
(74) Vertreter: Hahner, Ralph
(86) Internationale Anmeldenummer: PCT/EP2017/080342
(87) Internationale Veröffentlichungsnummer: WO 2018/104076

(56) Entgegenhaltungen:
- EP-A1- 2 543 499
- DE-B3-102010 055 874
- US-A- 5 392 514
- US-A1- 2013 299 061

## Beschreibung

Die Erfindung betrifft einen Hinterkantengurt eines Rotorblatts einer Windenergieanlage, ein Rotorblatt einer Windenergieanlage sowie ein Verfahren zum Herstellen eines Hinterkantengurts eines Rotorblatts einer Windenergieanlage.

Die Herstellung von Rotorblättern für Windenergieanlage erfolgt in einem zeit- und arbeitsaufwändigen Verfahren, bei dem viele Arbeitsschritte manuell ausgeführt werden. In vielen Fällen werden die Rotorblätter aus zwei Halbschalen zusammengesetzt, einer Druckseitenschale und einer Saugseitenschale. Die Rotorblattschalen bestehen zum überwiegenden Teil aus mit Epoxidharz getränkten Glas- und/oder Kohlefasermaterialien, in welche außerdem Kernmaterial, beispielsweise Schaum oder Balsaholz, eingelegt ist. Zum Herstellen der Rotorblattschalen wird das Fasermaterial in eine Form eingelegt und in Sandwich-Bauweise mit Kernmaterial kombiniert.

Im Bereich der Rotorblatthinterkante, also an einer hinteren Kante der Blattschalen, werden aus Endlosfasern aufgebaute Gurte, sogenannte Hinterkantengurte, in die Rotorblattschalen integriert. Die Hinterkantengurte sind notwendig, um ein vorgegebenes Dehnungsniveau des Rotorblatts einzuhalten. Dieses resultiert aus den bei der Verwendung des Rotorblatts auftretenden wechselnden Eigengewichtsmomenten und aus dem Drehmoment resultierenden Schwenklasten. Ein aus zwei Halbschalen aufgebautes Rotorblatt, welches mit Hinterkantengurten versehen ist, ist beispielsweise aus der DE 10 2010 055 874 B3 bekannt, wobei der Hinterkantengurt durch Einlegen mit Harz getränkter Rovings in einer Werkzeugform und Aushärten den selben gebildet wird.

An einen Hinterkantengurt werden verschiedene Anforderungen gestellt. Er soll aus struktureller Sicht möglichst weit hinten im Rotorblatt liegen, also nahe der Rotorblatthinterkante platziert sein. Außerdem soll der Hinterkantengurt sich leicht an unterschiedliche Geometrien oder Blattprofile anpassen lassen. Er soll möglichst kompakt sein, um Beulversagen zu vermeiden. Ferner soll der Gurt nach Möglichkeit einfach und reproduzierbar herstellbar sein, beispielsweise als vorgefertigtes Bauteil (vielfach auch als "Prefab" bezeichnet). Es soll möglichst wenig Nacharbeit am hergestellten Rotorblatt oder an der hergestellten Rotorblattschale erforderlich sein. Ebenso soll sich der Hinterkantengurt einfach in die Rotorblattschale integrieren lassen.

Es sind Block-Hinterkantengurte bekannt, bei denen die Verstärkungslagen übereinander gestapelt sind. Bei Block-Gurten sind die einzelnen Faserlagen nicht gegeneinander versetzt. Die Faserlagen werden als nicht zueinander versetzt angesehen, wenn ihr maximaler Versatz in der Größenordnung einer Lagenstärke liegt.

Außerdem sind aufgefächerte Hinterkantengurte bekannt, bei denen die einzelnen Faserlagen gegeneinander versetzt sind. Bei einem aufgefächerten Gurt ist der Versatz der einzelnen aufeinander folgenden, also direkt übereinanderliegenden Lagen größer als das Maß einer einzelnen Lage, also der Lagenstärke. Aufgefächerte Hinterkantengurte laufen sehr dünn zur Hinterkante hin aus, so dass sie auch in dünn auslaufenden Blattprofilen nahe der Rotorblatthinterkante platziert werden können.

Hierzu sind reine Block-Gurte aufgrund ihrer Geometrie nicht oder nur schlecht geeignet. Sie können in dünn auslaufenden Profilen nicht in der Nähe der Hinterkante platziert werden. Dementsprechend ist ein solcher Block-Gurt für die Belastung in Schwenkrichtung nicht optimal platziert. Aufgefächerte Gurte reichen zwar weit in Richtung der Rotorblatthinterkante, sie laufen jedoch zumeist auch sehr dünn in Richtung der Rotorblattvorderkante aus. Hierdurch kann der Gurt im Betrieb beulen. Außerdem liegt bei solchen Gurten ein Teil der Lagen weit von der Hinterkante entfernt und hat somit keine optimale Position, um Belastungen in Schwenkrichtung aufzunehmen.

Die US 5 392 514 A betrifft ein Verfahren zur Herstellung einer Schale eines Leichtbau-Verbund-Propulsor-Blattes mit Holm- und Schalenkonstruktion mit einem Vorderkantenabschnitt, der die doppelte Dicke wie der Rest der Schale aufweist.

Die EP 2 543 499 A1 betrifft eine Windturbinenschaufel, die eine Schalenstruktur aus einem faserverstärkten Polymermaterial mit einer Polymermatrix und einem Verstärkungsmaterial mit mehreren in die Polymermatrix eingebetteten Kohlefaserschichten aufweist, wobei wenigstens ein Teil der Schalenstruktur aus einem Laminat gebildet ist, das wenigstens eine Metallfilamentschicht umfasst, die Metallfilamente aufweist und zwischen zwei Kohlefaserschichten angeordnet ist, die nur Kohlefasern aufweisen, wobei die Kohlefaserschichten zusammenhängend mit der Metallfilamentschicht angeordnet sind.

Es ist eine Aufgabe der Erfindung, einen verbesserten Hinterkantengurt, ein verbessertes Rotorblatt mit einem solchen Hinterkantengurt und ein verbessertes Verfahren zum Herstellen eines Hinterkantengurts eines Rotorblatts einer Windenergieanlage anzugeben.

Die Aufgabe wird gelöst durch einen Hinterkantengurt eines Rotorblatts einer Windenergieanlage, welcher dadurch fortgebildet ist, dass eine erste Faserlage, eine zweite Faserlage, eine Block-Faserlage und eine blockförmige Kernlage aus Kernmaterial ausgebildet sind, wobei auf der mit wenigstens einer Fase versehenen und aufgefächerten ersten Faserlage die Block-Faserlage und die Kernlage angeordnet sind, und wobei die Block-Faserlage und die Kernlage mit jeweils einer ihrer Stirnseiten einander gegenüberliegend angeordnet sind, und wobei auf der Block-Faserlage und der Kernlage die mit wenigstens einer Fase versehene aufgefächerte zweite Faserlage angeordnet ist, wobei die Faserlagen und die Kernlage mit Harz infusioniert sind und das Harz ausgehärtet ist.

Im Kontext der vorliegenden Beschreibung wird unter der ersten Faserlage, der zweiten Faserlage und der Block-Faserlage jeweils eine Sequenz an Faserlagen und keine Einzelschicht verstanden. Soll auf eine einzelne Faserlage Bezug genommen werden, so wird diese als Einzellage bezeichnet.

Es handelt sich bei dem erfindungsgemäßen Hinterkantengurt um einen Hinterkantengurt mit integriertem Kernmaterial. Die Kernlage ist beispielsweise aus einem Schaum oder aus Balsaholz. Das fasermaterial ist beispielsweise ein Gelege aus Glas- oder Kohlefasern. An den Hinterkantengurt eines Rotorblatts werden verschiedene Anforderungen gestellt, die weder von reinen Block-Gurten noch von aufgefächerten Gurten optimal erfüllt werden. Es wäre möglich, diese beiden Bauformen miteinander zu kombinieren, um einen Kompromiss zu finden. Ein solches Gurt-Design ist jedoch stark asymmetrisch in Dickenrichtung und dadurch beulanfällig. Zudem ist ein solcher Gurt aufwändig zu bauen und erzeugt eine für den Kompositbau unvorteilhafte Innenkontur, welche Stufen aufweist. Außerdem würde eine Kombination aus einem aufgefächerten Gurt und einem Block-Gurt während der Blattverklebung zu einer Kleberansammlung an der Hinterkante führen, welche zu Qualitätsabweichungen führen kann.

Der Hinterkantengurt gemäß Aspekten der Erfindung hat einen nahezu symmetrischen Aufbau aus jeweils einer aufgefächerten Außen- und Innenlage und einer zwischen diesen eingebetteten Block- und Kernlage. Die Blocklage und die Kernlage sind auf Stoß angeordnet. Die einander gegenüberliegenden Stirnseiten sind insbesondere unmittelbar aneinander angrenzend angeordnet. Die aufgefächerten Innen- und Außenlagen müssen nicht exakt die gleiche Anzahl an Lagen haben. Ebenso kann die genaue Position zwischen Innen- und Außenlagen leicht variieren.

Ein solcher Aufbau hat unter anderem die folgenden Vorteile. Der Aufbau hat im Sinne des Faserverbunddesigns einen symmetrisch Querschnitt. Hohe Kernmaterialstärken können bis weit in die Hinterkante des Rotorblatts hinein geführt werden. Der Hinterkantengurt weist einen geometrisch einfachen Aufbau auf und keine Stufen auf der Oberfläche. Er lässt sich also effizient fertigen und ohne großen Aufwand in die Rotorblattschale integrieren. Es kann eine erhöhte Bauteilstärke in der Hinterkante des Rotorblatts erreicht werden. Außerdem ist der Hinterkantengurt leicht und reproduzierbar herzustellen. Der Bauraum in der Hinterkante des Rotorblatts ist mit weiteren Verstärkungslagen ausgefüllt. Es entsteht eine harmonische Klebespaltdicke. Außerdem erfolgen in dem Gurt keine harten Übergänge. Beispielsweise sind die Blocklagen auf Stoß mit dem Kernmaterial angeordnet, so dass ein weicher Übergang möglich ist. Das Kernmaterial ist einfach und günstig herzustellen, da es anders als bisher üblich nicht dünn in Richtung Hinterkante auslaufen muss. Der Hinterkantengurt ist auch einfach herzustellen, da klare Abgrenzungen und Übergänge zwischen seinen einzelnen funktionellen Bestandteilen vorhanden sind.

Gemäß einer vorteilhaften Ausführungsform ist vorgesehen, dass die erste Faserlage zwei Fasen aufweist und/oder die zweite Faserlage zwei Fasen aufweist. Insbesondere ist vorgesehen, dass die erste Faserlage und/oder die zweite Faserlage in einem zumindest näherungsweise senkrecht zu einer Längserstreckungsrichtung des Hinterkantengurts orientierten Querschnitt trapezförmig sind/ist.

In den aufgefächerten Faserlagen befinden sich insbesondere zwei Fünftel oder weniger der zur Herstellung des Hinterkantengurts verwendeten Faserlagen. Durch die Anordnung der Block-Faserlage auf einer der beiden Fasen der aufgefächerten Faserlage kann viel Fasermaterial im Endbereich, d.h. an der Hinterkante des Rotorblatts, angeordnet werden, was sich positiv auf die Stabilität des Rotorblatts auswirkt.

Es ist insbesondere vorgesehen, dass die Fasen die vollständige Materialstärke der Faserlage einnehmen, wobei insbesondere die erste Faserlage und/oder die zweite Faserlage in einem zumindest näherungsweise senkrecht zu einer Längserstreckungsrichtung des Hinterkantengurts orientierten Querschnitt dreieckig sind/ist. Die Breite der Fase, d.h. ihre Abmessung in Querrichtung des Rotorblatts entspricht in etwa einer Breite der Block-Faserlage. Bei den im Querschnitt dreieckigen Faserlagen spricht man vielfach auch von vollständig aufgefächerten Faserlagen.

Bei einer solchen Konstruktion ist es möglich, dass sich gemäß einem weiteren Ausführungsbeispiel der Hinterkantengurt in Richtung einer Hinterkante verjüngt. Es ist also diejenige Kante, welche im montierten Zustand der Rotorblatthinterkante am nächsten ist, dünner als ein weiter vorn liegender Bereich des Hinterkantengurts.

Ferner ist insbesondere vorgesehen, dass die Block-Faserlage und die Kernlage an ihren einander gegenüberliegenden Stirnseiten die gleiche Materialstärke aufweisen, so dass vorteilhaft keine Stufe entsteht. Das Kernmaterial liegt auf Stoß mit der Block-Faserlage, wobei die Stirnseiten der Block-Faserlage und der Kernlage insbesondere unmittelbar aneinander angrenzend angeordnet sind. Das Kernmaterial hat also auf dieser Seite die Höhe (oder Materialstärke) der Blocklage und schafft mit einer variablen Höhe auf der anderen Seite einen eventuell erforderlichen Höhenausgleich zu benachbartem Kernmaterial oder einem anderen Bauteil. Das Kernmaterial kann außerdem geschlitzt sein, um der Kontur des Hinterkantengurts folgen zu können.

Gemäß einer weiteren vorteilhaften Ausführungsform ist vorgesehen, dass die Fase der aufgefächerten ersten Faserlage in Richtung der Block-Faserlage oder in Richtung der Kernlage weist und insbesondere eine der Fase gegenüberliegende Flachseite der ersten Faserlage in einer Außenseite des Hinterkantengurts liegt. Indem die Blocklage zwischen zwei aufgefächerten Faserlagen platziert wird, wobei die Blocklage in etwa die Breite einer jeweiligen Fase der aufgefächerten Faserlagen hat, kann ein zur Endkante hin schlank auslaufender Gurt mit hoher Stabilität angegeben werden.

Dies wird weiter verbessert, indem gemäß einer weiteren Ausführungsform vorgesehen ist, dass eine der Fase gegenüberliegende Flachseite der zweiten Faserlage in Richtung der Block-Faserlage und/oder in Richtung der Kernlage weist und insbesondere die Fase der aufgefächerten zweiten Faserlage in einer Innenseite des Hinterkantengurts liegt.

Es hat sich als besonders vorteilhaft herausgestellt, wenn die Block-Faserlagen und die aufgefächerten Faserlagen in einem bestimmten Verhältnis zueinander stehen. Daher ist gemäß einer weiteren Ausführungsform vorgesehen, dass die Block-Faserlage einen Anteil von einem Drittel oder mehr, bezogen auf alle im Hinterkantengurt vorhandenen Faserlagen, einnimmt. Dabei wird der Anteil der Block-Faserlage beispielsweise in einem Querschnitt des Hinterkantengurts bestimmt. Ein Drittel der von Faserlagen in diesem Querschnitt eingenommenen Fläche wird also von der Block-Faserlage eingenommen, der Querschnitt zumindest näherungsweise senkrecht zu einer Längserstreckungsrichtung des Hinterkantengurts. Es ist ebenso möglich, dass sich der Anteil auf das Volumen bezieht, welches die Block-Faserlage, bezogen auf das Gesamtvolumen sämtlicher Faserlagen, in dem Hinterkantengurt einnimmt.

Der Hinterkantengurt gemäß verschiedenen Ausführungsformen eignet sich besonders gut für Rotorblätter, deren Hinterkantenverstärkung direkt ins Kernmaterial übergehen soll - sowohl geometrisch als auch strukturell. Ferner ist der Hinterkantengurt besonders gut für eine Kombination mit kavitätischen Formen geeignet. Es wird ein vorgefertigter Hinterkantengurt bereitgestellt, der lediglich geringe Trimmarbeiten erfordert.

Die Aufgabe wird außerdem gelöst durch ein Rotorblatt mit einem Hinterkantengurt gemäß einem oder mehreren der zuvor genannten Ausführungsformen. Auf das Rotorblatt treffen gleiche oder ähnliche Vorteile zu, wie sie bereits im Hinblick auf den Hinterkantengurt selbst erwähnt wurden.

Das Rotorblatt ist vorteilhaft durch einen Hinterkantengurt fortgebildet, der in einem Rotorblattwurzelbereich aus zumindest einer Block-Faserlage aufgebaut ist und der in einem Rotorblattspitzenbereich gemäß einer oder mehrerer der zuvor genannten Ausführungsformen ausgebildet ist. Der Hinterkantengurt gemäß Aspekten der Erfindung eignet sich also besonders gut für Rotorblätter, deren Hinterkantenverstärkung im Wurzelbereich aus einem Block aufgebaut wird und ab einer gewissen Entfernung von der Rotorblattwurzel (in Richtung Rotorblattspitze) in einen Hinterkantengurt übergehen soll, so wie er oben gemäß verschiedenen Ausführungsformen beschrieben ist.

Beispielsweise ist vorgesehen, dass in einem ersten Drittel des Rotorblatts (betrachtet von der Rotorblattwurzel) Der Hinterkantengurt aus einem Block von Faserlagen aufgebaut ist. In einem sich anschließenden zweiten Drittel des Rotorblatts ist der Hinterkantengurt gemäß einer oder mehrerer der zuvor genannten Ausführungsformen ausgebildet. In einem äußeren Drittel des Rotorblatts, welches die Rotorblattspitze umfasst, ist der Hinterkantengurt aus aufgefächerten Faserlagen, also einer Mehrzahl von aufgefächert angeordneten Einzellagen, aufgebaut, zwischen denen außerdem Kernmaterial angeordnet ist. Der Aufbau des Hinterkantengurts im äußeren Drittel ist beispielsweise aus der DE 10 2010 055 874 B3 bekannt.

Zur weiteren Verbesserung können in einem Übergangsbereich von einem Blockgurt zu einem Mischgurt, also einem Hinterkantengurt, welcher Kernmaterial enthält, die stark abfallende Dicke in der Hinterkante mit Kernmaterial oder einem anderen Füllstoff wie Kleber oder Laminat aufgefüllt werden, um damit eine inhomogene Klebespaltdicke zu vermeiden.

Ferner wird die Aufgabe gelöst durch ein Verfahren zum Herstellen eines Hinterkantengurts eines Rotorblatts einer Windenergieanlage, wobei das Verfahren dadurch fortgebildet ist, dass der Hinterkantengurt eine erste Faserlage, eine zweite Faserlage, eine Block-Faserlage und eine blockförmige Kernlage aus Kernmaterial umfasst, wobei auf der mit wenigstens einer Fase versehenen aufgefächerten ersten Faserlage die Block-Faserlage und die Kernlage angeordnet werden, und wobei die Block-Faserlage und die Kernlage mit jeweils einer ihrer Stirnseiten einander gegenüberliegend angeordnet werden, und wobei auf der Block-Faserlage und der Kernlage die mit wenigstens einer Fase versehenen aufgefächerte zweite Faserlage angeordnet wird und anschließend die Faserlagen und die Kernlage mit Harz infusioniert werden und anschließend das Harz aushärtet.

Das Verfahren gemäß der Erfindung ist einfach, effizient und reproduzierbar durchführbar, so dass ein hochstabiler Hinterkantengurt in gleichbleibend hoher Qualität ökonomisch hergestellt werden kann.

Vorteilhaft ist das Verfahren dadurch fortgebildet, dass die Faserlagen und die Kernlage derart angeordnet werden, dass die Fase der aufgefächerten ersten Faserlage in Richtung der Block-Faserlage oder in Richtung der Kernlage weist, wenn die Block-Faserlage oder die Kernlage auf der ersten Faserlage angeordnet werden, wobei insbesondere eine der Fase gegenüberliegende Flachseite der ersten Faserlage in einer Außenseite des hergestellten Hinterkantengurts liegt.

Ferner ist insbesondere vorgesehen, dass die Faserlagen und die Kernlage derart angeordnet werden, dass eine der Fase gegenüberliegende weitere Flachseite der zweiten Faserlage in Richtung der Block-Faserlage oder in Richtung der Kernlage weist, wenn die zweite Faserlage auf der Block-Faserlage oder der Kernlage angeordnet wird, wobei insbesondere die Fase der aufgefächerten zweiten Faserlage in einer Innenseite des hergestellten Hinterkantengurts liegt.

Auf das Verfahren treffen gleiche oder ähnliche Vorteile zu, wie sie bereits im Hinblick auf den Hinterkantengurt erwähnt wurden.

Weitere Merkmale der Erfindung werden aus der Beschreibung erfindungsgemäßer Ausführungsformen zusammen mit den Ansprüchen und den beigefügten Zeichnungen ersichtlich. Die Erfindung wird durch die beigefügten Ansprüche definiert.

Die Erfindung wird nachstehend anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Rotorblatt in schematisch vereinfachter Draufsicht,
- Fig. 2: einen Hinterkantengurt in schematisch vereinfachter Querschnittsansicht, entlang der in Fig. 1 mit B-B bezeichneten Schnittlinie,
- Fig. 3: eine weitere schematisch vereinfachte Querschnittsansicht eines Hinterkantengurts in einem Übergangsbereich, entlang der in Fig. 1 mit A-A bezeichneten Schnittlinie,
- Fig. 4 bis 7: einzelne Schritte eines Verfahrens zum Herstellen eines Hinterkantengurts eines Rotorblatts.

In den Zeichnungen sind jeweils gleiche oder gleichartige Elemente und/oder Teile mit denselben Bezugsziffern versehen, so dass von einer erneuten Vorstellung jeweils abgesehen wird.

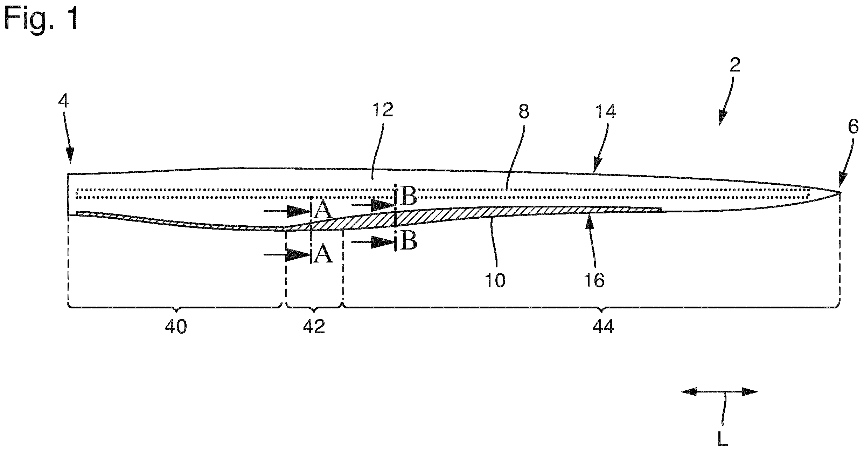

Fig. 1 zeigt ein Rotorblatt 2 einer Windenergieanlage in einer schematisch vereinfachten Draufsicht. Das Rotorblatt 2 erstreckt sich zwischen einer Rotorblattwurzel 4 und einer Rotorblattspitze 6 in einer Längsrichtung L. Das Rotorblatt 2 ist aus einer Saugseitenschale 12 und einer in Fig. 1 abgewandten Druckseitenschale aufgebaut. Die Saugseitenschale 12 und die Druckseitenschale weisen jeweils einen Hauptgurt 8 sowie einen Hinterkantengurt 10 auf. In Fig. 1 ist der Hauptgurt 8 der Saugseitenschale 12 punktiert angedeutet. Die Rotorblattschalen sind an einer im Betrieb dem Wind zugewandten Rotorblattvorderkante 14 und an einer gegenüberliegenden Rotorblatthinterkante 16 zusammengefügt, beispielsweise verklebt. Der Hinterkantengurt 10 erstreckt sich ebenso wie das Rotorblatt 2 in der Längsrichtung L ausgehend von einer Position nahe der Rotorblattwurzel 4 in Richtung der Rotorblattspitze 6 über ca. 4/5 der Gesamtlänge des Rotorblatts 2.

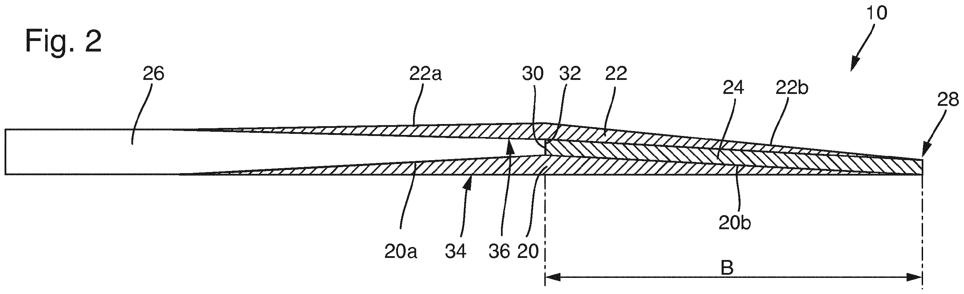

Fig. 2 zeigt den Hinterkantengurt 10 in einer schematisch vereinfachten Querschnittsansicht in einer Ebene, welche zumindest näherungsweise senkrecht zur Längsrichtung L orientiert ist. Gezeigt ist ein Querschnitt durch den Hinterkantengurt 10 entlang der in Fig. 1 mit B-B bezeichneten Schnittlinie.

Der Hinterkantengurt 10 umfasst eine erste Faserlage 20, eine zweite Faserlage 22, eine Block-Faserlage 24 und eine blockförmige Kernlage 26 aus Kernmaterial. Die zur Herstellung der Faserlagen 20, 22, 24 verwendeten Fasern sind beispielsweise Glasfasern oder Kohlefasern. Das Kernmaterial ist beispielsweise ein Schaum oder Balsaholz. Die Faserlagen 20, 22, 24 und die Kernlage 26 sind mit Harz, insbesondere Kunstharz, infusioniert. Das Harz ist anschließend ausgehärtet. Es handelt sich bei dem Hinterkantengurt 10 bevorzugt um ein vorgefertigtes Bauteil. Diese werden vielfach auch als Prefab bezeichnet.
Die erste und die zweite Faserlage 20, 22 sind aufgefächerte Faserlagen. Ihre aufeinanderfolgenden Lagen aus beispielsweise Glas- oder Kohlefaser sind also um einen Wert gegeneinander versetzt, der größer als die Dicke einer einzelnen Faserlage ist. Die erste und die zweite Faserlage 20, 22 umfassen außerdem jeweils eine erste Fase 20a, 22a und eine zweite Fase 20b, 22b. Die Block-Faserlage 24 und die Kernlage 26 sind auf der mit wenigstens einer Fase 20a, 20b versehenen aufgefächerten ersten Faserlage 20 angeordnet.

In dem in Fig. 2 gezeigten Ausführungsbeispiel weist die erste Faserlage 20 zwei Fasen, nämlich die erste Fase 20a und die zweite Fase 20b, auf. Auch die zweite Faserlage 22 weist zwei Fasen, nämlich die erste Fase 22a und die zweite Fase 22b, auf. Die Fasen 20a, 20b, 22a, 22b erstrecken sich beispielhaft über die vollständige Materialstärke der jeweiligen Faserlage 20, 22. Daher sind sowohl die erste Faserlage 20 als auch die zweite Faserlage 22 im Querschnitt dreieckig. Es ist gemäß weiterer Ausführungsbeispiele vorgesehen, dass sich die Fasen 20a, 20b, 22a, 22b nicht über die vollständige Materialstärke der Faserlagen 20, 22 erstrecken. In diesem Fall sind die Faserlagen 20, 22 im Querschnitt trapezförmig.

Die Block-Faserlage 24 weist beispielhaft eine Breite B auf, welche zumindest näherungsweise einer Breite B der zweiten Fase 20b der ersten Faserlage 20 entspricht. Die Breite B wird in einer Richtung gemessen, die zumindest näherungsweise senkrecht zur Längsrichtung L orientiert ist. Die Block-Faserlage 24 ist also mit anderen Worten vollständig auf der zweiten Fase 20b der ersten Faserlage 20 angeordnet. Auch die zweite Fase 22b der zweiten Faserlage 22 hat eine Ausdehnung, die in etwa der Breite B entspricht. Da sowohl die erste Faserlage 20 als auch die zweite Faserlage 22 jeweils mit einer zweiten Fase 20b, 22b, versehen sind, verjüngt sich der Hinterkantengurt 10 in Richtung seiner Hinterkante 28. Die Hinterkante 28 des Hinterkantengurts 10 liegt im montierten Zustand nahe der Rotorblatthinterkante 16 (vgl. Fig. 1).

Auf der ersten Fase 20a der ersten Faserlage 20 kommt die Kernlage 26 teilweise zu liegen. Die Kernlage 26 ist der Block-Faserlage 24 gegenüberliegend angeordnet. Mit anderen Worten ist also eine Stirnseite 30 der Block-Faserlage 24 unmittelbar gegenüber einer weiteren Stirnseite 32 der Block-Faserlage 24 angeordnet. An diesen einander gegenüberliegenden Stirnseiten 30, 32 weisen die Kernlage 26 und die Block-Faserlage 24 die gleiche Materialstärke auf. Die Stirnseiten 30, 32 sind insbesondere unmittelbar aneinander angrenzend angeordnet.

Auf der Kernlage 26 und auf der Block-Faserlage 24 ist die mit wenigstens einer Fase 22a, 22b versehene aufgefächerte zweite Faserlage 22 angeordnet. Die erste Faserlage 20 weist eine den beiden Fasen 20a, 20b gegenüberliegende Flachseite 34 auf, die an einer Außenseite des Hinterkantengurts 10 liegt. Die erste Fase 20a weist in Richtung der Kernlage 26, die zweite Fase 20b, weist in Richtung der Block-Faserlage 24. Bei der zweiten Faserlage 22 weisen die erste und die zweite Fase 22a, 22b von der Kernlage 26 und der Block-Faserlage 24 weg und liegen in einer Innenseite des Hinterkantengurts 10. Der ersten und zweiten Fase 22a, 22b der zweiten Faserlage 22 gegenüberliegend befindet sich eine weitere Flachseite 36, welche in Richtung der Kernlage 26 und der Block-Faserlage 24 weist.

Es hat sich als vorteilhaft herausgestellt, wenn die Block-Faserlage 24 einen Anteil von einem Drittel oder mehr, bezogen auf alle in dem Hinterkantengurt 10 vorhandenen Faserlagen 20, 22, 24 einnimmt. Beispielsweise nimmt die Block-Faserlage 24 im in Fig. 2 dargestellten Querschnitt zumindest ein Drittel oder mehr der Querschnittsfläche aller Faserlagen 20, 22, 24 ein.

Das in Fig. 1 gezeigte Rotorblatt 2 weist in einem Rotorblattwurzelbereich 40, der sich beispielsweise ausgehend von der Rotorblattwurzel 4 in Richtung der Rotorblattspitze 6 auf einem Drittel der Gesamtlänge des Rotorblatts 2 erstreckt, einen Hinterkantengurt 10 auf, der aus Block-Faserlagen 24 aufgebaut ist. In einem Übergangsbereich 42 erfolgt der Übergang von einem aus Block-Faserlagen 24 aufgebauten Hinterkantengurt 10 in einen Hinterkantengurt 10, wie er gemäß dem in Fig. 2 beschriebenen Ausführungsbeispiel ausgestaltet ist. Dieser aus Kernmaterial und Fasermaterial aufgebaute Hinterkantengurt 10 erstreckt sich in einem Rotorblattspitzenbereich 44.

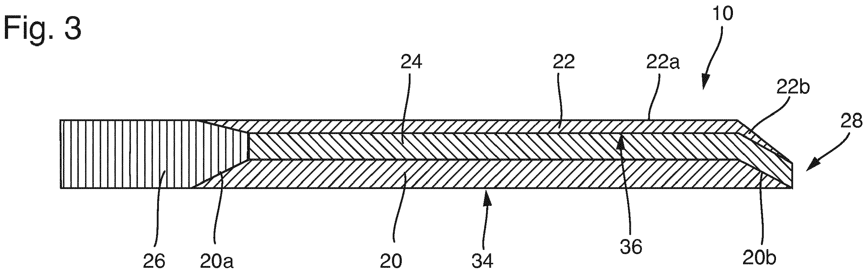

Fig. 3 zeigt den Hinterkantengurt 10 in dem Übergangsbereich 42 entlang der in Fig. 1 mit A-A bezeichneten Schnittlinie. Auch der in Fig. 3 gezeigte schematische und vereinfachte Querschnitt ist zumindest näherungsweise senkrecht zu der Längsrichtung L orientiert.

Der Hinterkantengurt 10 umfasst eine Block-Faserlage 24, eine erste Faserlage 20, deren Flachseite 34 in Richtung einer Außenseite des Hinterkantengurts 10 orientiert ist, und eine zweite Faserlage 22. Außerdem ist eine Kernlage 26 umfasst. Die zweite Faserlage 22 weist eine sehr große erste Fase 22a und eine im Vergleich dazu sehr kleine zweite Fase 22b auf. Ihre gegenüberliegende weitere Flachseite 36 ist zweifach abgeknickt. Sie folgt im Bereich der Hinterkante 28 dem Verlauf der zweiten Fase 20b der ersten Faserlage 20. In dem Bereich, in dem die zweite Faserlage 22 an die Kernlage 26 anschließt, verläuft die weitere Flachseite 36 spiegelbildlich zur ersten Fase 20a der ersten Faserlage 20.

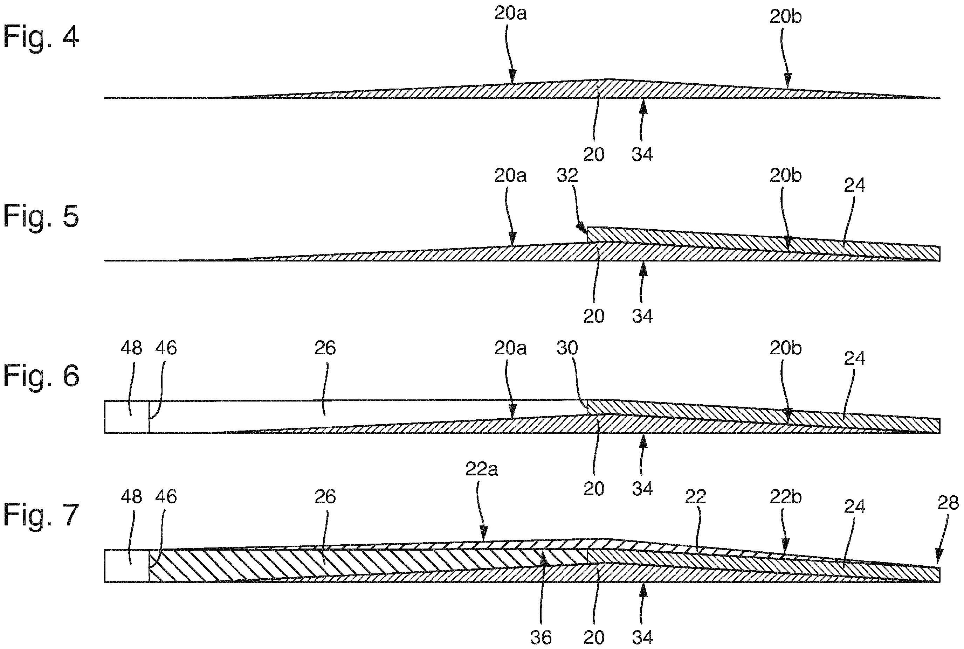

In den Fig. 4 bis 7 sind einzelne Schritte eines Verfahrens zum Herstellen eines Hinterkantengurts 10 eines Rotorblatts 2 illustriert.

Das Verfahren zum Herstellen des Hinterkantengurts 10 beginnt in Fig. 4 mit der Bereitstellung der ersten aufgefächerten Faserlage 20, die eine erste Fase 20a und eine zweite Fase 20b aufweist. Wie Fig. 5 zeigt, wird die Block-Faserlage 24 auf die zweite Fase 20b abgelegt. Anschließend wird, wie Fig. 6 zeigt, die Kernlage 26 auf der ersten Fase 20a der ersten aufgefächerten Faserlage 20 abgelegt. Dabei wird darauf geachtet, dass eine Höhe oder Materialstärke der Stirnseite 30 der Kernlage 26 zumindest näherungsweise der Höhe bzw. Materialstärke der Block-Faserlage 24 an ihrer Stirnseite 30 entspricht. Eine gegenüberliegende Stirnseite 46 der Kernlage 26 wird beispielsweise an die Materialstärke von weiterem Kernmaterial 48 angepasst. Es ist ebenso möglich, dass die Höhe der Kernlage 26 an der gegenüberliegenden Stirnseite 46 an die Materialstärke eines weiteren Bauteils angepasst wird. Damit die Kernlage 26 der Form des Hinterkantengurts 10 besser folgen kann, kann dieses geschlitzt werden. Schließlich wird die zweite aufgefächerte Faserlage 22 auf die Kernlage 26 und auf die Block-Faserlage 24 aufgelegt. Anschließend wird das Fasermaterial der Faserlagen 20, 22, 24 und das Kernmaterial der Kernlage 26 mit Harz infusioniert, beispielsweise in einem Vakuuminfusionsverfahren. Sobald das Harz, beispielsweise Kunstharz, ausgehärtet ist, steht der Hinterkantengurt 10 als vorgefertigtes Bauteil zur Verfügung.

Es ist ebenso vorgesehen, dass der Hinterkantengurt 10 während der Herstellung der Rotorblattschalen, beispielsweise der Saugseitenschale 12, gemeinsam mit diesen hergestellt wird. Folglich wird der Hinterkantengurt 10 auch gemeinsam mit dem Fasermaterial der Rotorblattschalen infusioniert. Bei einem solchen Verfahren wird der Hinterkantengurt 10 nicht als vorgefertigtes Bauteil hergestellt.

### Bezuqszeichenliste

- 2: Rotorblatt
- 4: Rotorblattwurzel
- 6: Rotorblattspitze
- 8: Hauptgurt
- 10: Hinterkantengurt
- 12: Saugseitenschale
- 14: Rotorblattvorderkante
- 16: Rotorblatthinterkante
- 20: erste Faserlage
- 22: zweite Faserlage
- 20a, 22a: erste Fase
- 20b, 22b: zweite Fase
- 24: Block-Faserlage
- 26: Kernlage
- 28: Hinterkante
- 30: Stirnseite
- 32: weitere Stirnseite
- 34: Flachseite
- 36: weitere Flachseite
- 40: Rotorblattwurzelbereich
- 42: Übergangsbereich
- 44: Rotorblattspitzenbereich
- 46: gegenüberliegende Stirnseite
- 48: weiteres Kernmaterial

- L: Längsrichtung
- B: Breite

## Patentansprüche

1. Hinterkantengurt (10) eines Rotorblatts (2) einer Windenergieanlage mit einer Block-Faserlage (24), **gekennzeichnet durch** eine erste Faserlage (20), eine zweite Faserlage (22) und eine blockförmige Kernlage (26) aus Kernmaterial, wobei auf der mit wenigstens einer Fase (20a, 20b, 22a, 22b) versehenen und aufgefächerten ersten Faserlage (20) die Block-Faserlage (24) und die Kernlage (26) angeordnet sind, und wobei die Block-Faserlage (24) und die Kernlage (26) mit jeweils einer ihrer Stirnseiten (30, 32) einander gegenüberliegend angeordnet sind, und wobei auf der Block-Faserlage (24) und der Kernlage (26) die mit wenigstens einer Fase (22a, 22b) versehene aufgefächerte zweite Faserlage (22) angeordnet ist, wobei die Faserlagen (20, 22, 24) und die Kernlage (26) mit Harz infusioniert sind und das Harz ausgehärtet ist.

2. Hinterkantengurt (10) nach Anspruch 1, **dadurch gekennzeichnet, dass** die erste Faserlage (20) zwei Fasen (20a, 20b) aufweist und/oder die zweite Faserlage (22) zwei Fasen (22a, 22b) aufweist.

3. Hinterkantengurt (10) nach Anspruch 2, **dadurch gekennzeichnet, dass** die erste Faserlage (20) und/oder die zweite Faserlage (22) in einem zumindest näherungsweise senkrecht zu einer Längserstreckungsrichtung (L) des Hinterkantengurts (10) orientierten Querschnitt trapezförmig sind/ist.

4. Hinterkantengurt (10) nach Anspruch 2 oder 3, **dadurch gekennzeichnet, dass** die Fasen (20a, 20b, 22a, 22b) die vollständige Materialstärke der Faserlage (20, 22) einnehmen, wobei insbesondere die erste Faserlage (20) und/oder die zweite Faserlage (22) in einem zumindest näherungsweise senkrecht zu einer Längserstreckungsrichtung (L) des Hinterkantengurts (10) orientieren Querschnitt dreieckig sind/ist.

5. Hinterkantengurt (10) nach einem der Ansprüche 1 bis 4, **dadurch gekennzeichnet, dass** sich der Hinterkantengurt (10) in Richtung einer Hinterkante (28) verjüngt.

6. Hinterkantengurt (10) nach einem der Ansprüche 1 bis 5, **dadurch gekennzeichnet, dass** die Block-Faserlage (24) und die Kernlage (26) an ihren einander gegenüberliegenden Stirnseiten (30, 32) die gleiche Materialstärke aufweisen.

7. Hinterkantengurt (10) nach einem der Ansprüche 1 bis 6, **dadurch gekennzeichnet, dass** die Fase (20a, 20b) der aufgefächerten ersten Faserlage (20) in Richtung der Block-Faserlage (24) oder in Richtung der Kernlage (26) weist und insbesondere eine der Fase (20a, 20b) gegenüberliegende Flachseite (34) der ersten Faserlage (20) in einer Außenseite des Hinterkantengurts (10) liegt.

8. Hinterkantengurt (10) nach einem der Ansprüche 1 bis 7, **dadurch gekennzeichnet, dass** eine der Fase (22a, 2b) gegenüberliegende Flachseite (36) der zweiten Faserlage (22) in Richtung der Block-Faserlage (24) und/oder in Richtung der Kernlage (26) weist und insbesondere die Fase (22a, 22b) der aufgefächerten zweiten Faserlage (22) in einer Innenseite des Hinterkantengurts (10) liegt.

9. Hinterkantengurt (10) nach einem der Ansprüche 1 bis 8, **dadurch gekennzeichnet, dass** die Block-Faserlage (24) einen Anteil von einem Drittel oder mehr, bezogen auf alle im Hinterkantengurt (10) vorhandene Faserlagen (20, 22, 24), einnimmt.

10. Rotorblatt (2) mit einem Hinterkantengurt (10) nach einem der Ansprüche 1 bis 9.

11. Rotorblatt (2) nach Anspruch 10, **gekennzeichnet durch** einen Hinterkantengurt (10), der in einem Rotorblattwurzelbereich (40) aus zumindest einer Block-Faserlage (24) aufgebaut ist und der in einem Rotorblattspitzenbereich (44) nach einem der Ansprüche 1 bis 9 ausgebildet ist.

12. Verfahren zum Herstellen eines Hinterkantengurts (10) eines Rotorblatts (2) einer Windenergieanlage mit einer Block-Faserlage (24), **dadurch gekennzeichnet, dass** der Hinterkantengurt (10) eine erste Faserlage (20), eine zweite Faserlage (22) und eine blockförmige Kernlage (26) aus Kernmaterial umfasst, wobei auf der mit wenigstens einer Fase (20a, 20b) versehenen aufgefächerten ersten Faserlage (20) die Block-Faserlage (24) und die Kernlage angeordnet werden, und wobei die Block-Faserlage (24) und die Kernlage (26) mit jeweils einer ihrer Stirnseiten (30, 32) einander gegenüberliegend angeordnet werden, und wobei auf der Block-Faserlage (24) und der Kernlage (26) die zweite mit wenigstens einer Fase (22a, 22b) versehenen aufgefächerten zweite Faserlage (22) angeordnet wird und anschließend die Faserlagen (20, 22, 24) und die Kernlage (26) mit Harz infusioniert werden und anschließend das Harz aushärtet.

13. Verfahren nach Anspruch 12, **dadurch gekennzeichnet, dass** die Faserlagen (20, 22, 24) und die Kernlage (26) derart angeordnet werden, dass die Fase (20a, 20b) der aufgefächerten ersten Faserlage (20) in Richtung der Block-Faserlage (24) oder in Richtung der Kernlage (26) weist, wenn die Block-Faserlage (24) oder die Kernlage (26) auf der ersten Faserlage (20) angeordnet werden, wobei insbesondere eine der Fase (20a, 20b) gegenüberliegende Flachseite (34) der ersten Faserlage (20) in einer Außenseite des hergestellten Hinterkantengurts (10) liegt.

14. Verfahren nach Anspruch 12 oder 13, **dadurch gekennzeichnet, dass** die Faserlagen (20, 22, 24) und die Kernlage (26) derart angeordnet werden, dass eine der Fase (22a, 22b) gegenüberliegende weitere Flachseite (36) der zweiten Faserlage (22) in Richtung der Block-Faserlage (24) oder in Richtung der Kernlage (26) weist, wenn die zweite Faserlage (22) auf der Block-Faserlage (24) oder der Kernlage (26) angeordnet wird, wobei insbesondere die Fase (22a, 22b) der aufgefächerten zweiten Faserlage (22) in einer Innenseite des hergestellten Hinterkantengurts (10) liegt.

## Claims

1. A trailing edge spar cap (10) of a rotor blade (2) of a wind energy installation, wherein the trailing edge spar cap (10) comprises a block type fiber layer (24),
**characterised by**
a first fiber layer (20), a second fiber layer (22) and a block-shaped core layer (26) made of core material, wherein the block type fiber layer (24) and the core layer (26) are arranged on the first fiber layer (20), which is provided with at least one bevel (20a, 20b, 22a, 22b) and which is fanned out, and wherein the block type fiber layer (24) and the core layer (26) are each arranged with one of their end faces (30, 32) opposite to one another, and wherein the fanned-out second fiber layer (22), which is provided with at least one bevel (22a, 22b), is arranged on the block type fiber layer (24) and the core layer (26), wherein the fiber layers (20, 22, 24) and the core layer (26) are infused with resin and the resin is cured.

2. The trailing edge spar cap (10) according to claim 1, **characterised in that** the first fiber layer (20) has two bevels (20a, 20b) and/or the second fiber layer (22) has two bevels (22a, 22b).

3. The trailing edge spar cap (10) according to claim 2, **characterised in that** the first fiber layer (20) and/or the second fiber layer (22) is/are of trapezoidal shape in a cross-section which is oriented at least approximately perpendicular to a direction of the longitudinal extent (L) of the trailing edge spar cap (10).

4. The trailing edge spar cap (10) according to claim 2 or 3, **characterised in that** the bevels (20a, 20b, 22a, 22b) occupy the entire material thickness of the fiber layer (20, 22), in particular wherein the first fiber layer (20) and/or the second fiber layer (22) is/are of triangular shape in a cross-section which is oriented at least approximately perpendicular to a direction of the longitudinal extent (L) of the trailing edge spar cap (10).

5. The trailing edge spar cap (10) according to any one of the claims 1 to 4, **characterised in that** the trailing edge spar cap (10) is tapered in the direction of a trailing edge (28).

6. The trailing edge spar cap (10) according to any one of the claims 1 to 5, **characterised in that** the block type fiber layer (24) and the core layer (26) have the same material thickness at their end faces (30, 32) which are located opposite one another.

7. The trailing edge spar cap (10) according to any one of the claims 1 to 6, **characterised in that** the bevel (20a, 20b) of the fanned-out first fiber layer (20) is oriented in the direction of the block type fiber layer (24) or in the direction of the core layer (26), and in particular **in that** a flat side (34) of the first fiber layer (20), which flat side (34) is located opposite the bevel (20a, 20b), lies in an outer side of the trailing edge spar cap (10).

8. The trailing edge spar cap (10) according to any one of the claims 1 to 7, **characterised in that** a flat side (36) of the second fiber layer (22), which flat side (36) is located opposite the bevel (22a, 2b), is oriented in the direction of the block type fiber layer (24) and/or in the direction of the core layer (26), and in particular **in that** the bevel (22a, 22b) of the fanned-out second fiber layer (22) lies in an inner side of the trailing edge spar cap (10).

9. The trailing edge spar cap (10) according to any one of the claims 1 to 8, **characterised in that** the block type fiber layer (24) occupies a proportion of one third or more of all of the fiber layers (20, 22, 24) which are present in the trailing edge spar cap (10).

10. A rotor blade (2) which comprises a trailing edge spar cap (10) according to any one of the claims 1 to 9.

11. The rotor blade (2) according to claim 10, **characterised by** a trailing edge spar cap (10) which, in a rotor blade root region (40), is constructed from at least one block type fiber layer (24) and which, in a rotor blade tip region (44), is constructed in accordance with any one of the claims 1 to 9.

12. A method of manufacturing a trailing edge spar cap (10) of a rotor blade (2) of a wind energy installation, wherein the trailing edge spar cap (10) comprises a block type fiber layer (24),
**characterised in that**
the trailing edge spar cap (10) comprises a first fiber layer (20), a second fiber layer (22) and a block-shaped core layer (26) of core material, wherein the block type fiber layer (24) and the core layer are arranged on the first fiber layer (20), which is provided with at least one bevel (20a, 20b) and which is fanned out, and wherein the block type fiber layer (24) and the core layer (26) are each arranged with one of their end faces (30, 32) opposite to one another, and wherein the fanned-out second fiber layer (22), which is provided with at least one bevel (22a, 22b), is arranged on the block type fiber layer (24) and the core layer (26), and wherein the fiber layers (20, 22, 24) and the core layer (26) are then infused with resin and wherein the resin is then cured.

13. The method according to claim 12, **characterised in that** the fiber layers (20, 22, 24) and the core layer (26) are arranged in such a way that the bevel (20a, 20b) of the fanned-out first fiber layer (20) is oriented in the direction of the block type fiber layer (24) or in the direction of the core layer (26) when the block type fiber layer (24) or the core layer (26) are arranged on the first fiber layer (20), in particular wherein a flat side (34) of the first fiber layer (20), which flat side (34) is located opposite the bevel (20a, 20b), lies in an outer side of the trailing edge spar cap (10) that has been manufactured.

14. The method according to claim 12 or 13, **characterised in that** the fiber layers (20, 22, 24) and the core layer (26) are arranged in such a way that a further flat side (36) of the second fiber layer (22), which further flat side (36) is located opposite the bevel (22a, 22b), is oriented in the direction of the block type fiber layer (24) or in the direction of the core layer (26) when the second fiber layer (22) is arranged on the block type fiber layer (24) or the core layer (26), in particular wherein the bevel (22a, 22b) of the fanned-out second fiber layer (22) lies in an inner side of the trailing edge spar cap (10) that has been manufactured.

## Revendications

1. Membrure de bord de fuite (10) d'une pale de rotor (2) d'une installation éolienne avec une couche de fibres en bloc (24), **caractérisée par** une première couche de fibres (20), une seconde couche de fibres (22) et une couche centrale en forme de bloc (26) en un matériau central, dans laquelle la couche de fibres en bloc (24) et la couche centrale (26) sont agencées sur la première couche de fibres (20) élargie et pourvue d'au moins un biseau (20a, 20b, 22a, 22b), et dans laquelle la couche de fibres en bloc (24) et la couche centrale (26) sont agencées avec respectivement un de leurs côtés avant (30, 32) à l'opposé l'une de l'autre, et dans laquelle la seconde couche de fibres (22) élargie pourvue d'au moins un biseau (22a, 22b) est agencée sur la couche de fibres en bloc (24) et la couche centrale (26), dans laquelle les couches de fibres (20, 22, 24) et la couche centrale (26) sont infusées avec de la résine et la résine est durcie.

2. Membrure de bord de fuite (10) selon la revendication 1, **caractérisée en ce que** la première couche de fibres (20) présente deux biseaux (20a, 20b) et/ou la seconde couche de fibres (22) présente deux biseaux (22a, 22b).

3. Membrure de bord de fuite (10) selon la revendication 2, **caractérisée en ce que** la première couche de fibres (20) et/ou la seconde couche de fibres (22) est/sont de forme trapézoïdale dans une section transversale orientée au moins approximativement perpendiculairement à un sens d'étendue longitudinale (L) de la membrure de bord de fuite (10).

4. Membrure de bord de fuite (10) selon la revendication 2 ou 3, **caractérisée en ce que** les biseaux (20a, 20b, 22a, 22b) occupent l'épaisseur de matériau complète de la couche de fibres (20, 22), dans laquelle en particulier la première couche de fibres (20) et/ou la seconde couche de fibres (22) est/sont triangulaire(s) dans une section transversale orientée au moins approximativement perpendiculairement à un sens d'étendue longitudinale (L) de la membrure de bord de fuite (10).

5. Membrure de bord de fuite (10) selon l'une des revendications 1 à 4, **caractérisée en ce que** la membrure de bord de fuite (10) se rétrécit en direction d'un bord de fuite (28).

6. Membrure de bord de fuite (10) selon l'une des revendications 1 à 5, **caractérisée en ce que** la couche de fibres en bloc (24) et la couche centrale (26) présentent sur leurs côtés avant (30, 32) opposés l'un à l'autre la même épaisseur de matériau.

7. Membrure de bord de fuite (10) selon l'une des revendications 1 à 6, **caractérisée en ce que** le biseau (20a, 20b) de la première couche de fibres (20) élargie est tournée en direction de la couche de fibres en bloc (24) ou en direction de la couche centrale (26) et en particulier un côté plat (34) opposé au biseau (20a, 20b) de la première couche de fibres (20) se trouve dans un côté extérieur de la membrure de bord de fuite (10).

8. Membrure de bord de fuite (10) selon l'une des revendications 1 à 7, **caractérisée en ce qu'**un côté plat (36) opposé au biseau (22a, 2b) de la seconde couche de fibres (22) est tourné en direction de la couche de fibres en bloc (24) et/ ou en direction de la couche centrale (26) et en particulier le biseau (22a, 22b) de la seconde couche de fibres (22) élargie se trouve dans un côté intérieur de la membrure de bord de fuite (10).

9. Membrure de bord de fuite (10) selon l'une des revendications 1 à 8, **caractérisée en ce que** la couche de fibres en bloc (24) occupe une part d'un tiers ou plus, par rapport à toutes les couches de fibres (20, 22, 24) présentes dans la membrure de bord de fuite (10).

10. Pale de rotor (2) avec une membrure de bord de fuite (10) selon l'une des revendications 1 à 9.

11. Pale de rotor (2) selon la revendication 10, **caractérisée par** une membrure de bord de fuite (10) qui est constituée dans une zone de pied de pale de rotor (40) d'au moins une couche de fibres en bloc (24) et qui est réalisée dans une zone de pointe de pale de rotor (44) selon l'une des revendications 1 à 9.

12. Procédé de fabrication d'une membrure de bord de fuite (10) d'une pale de rotor (2) d'une installation éolienne avec une couche de fibres en bloc (24), **caractérisé en ce que** la membrure de bord de fuite (10) comporte une première couche de fibres (20), une seconde couche de fibres (22) et une couche centrale en forme en bloc (26) en un matériau central, dans lequel la couche de fibres en bloc (24) et la couche centrale sont agencées sur la première couche de fibres (20) élargie pourvue d'au moins un biseau (20a, 20b), et dans lequel la couche de fibres en bloc (24) et la couche centrale (26) sont agencées à l'opposé l'une de l'autre avec respectivement un de leurs côtés avant (30, 32), et dans lequel la seconde couche de fibres (22) élargie pourvue d'au moins un biseau (22a, 22b) est agencée sur la couche de fibres en bloc (24) et la couche centrale (26) et ensuite les couches de fibres (20, 22, 24) et la couche centrale (26) sont infusées avec de la résine et la résine est ensuite durcie.

13. Procédé selon la revendication 12, **caractérisé en ce que** les couches de fibres (20, 22, 24) et la couche centrale (26) sont agencées de telle manière que le biseau (20a, 20b) de la première couche de fibres (20) élargie soit tourné en direction de la couche de fibres en bloc (24) ou en direction de la couche centrale (26) lorsque la couche de fibres en bloc (24) ou la couche centrale (26) sont agencées sur la première couche de fibres (20), dans lequel en particulier un côté plat (34) opposé au biseau (20a, 20b) de la première couche de fibres (20) se trouve dans un côté extérieur de la membrure de bord de fuite (10) fabriquée.

14. Procédé selon la revendication 12 ou 13, **caractérisé en ce que** les couches de fibres (20, 22, 24) et la couche centrale (26) sont agencées de telle manière qu'un autre côté plat (36) opposé au biseau (22a, 22b) de la seconde couche de fibres (22) soit tourné en direction de la couche de fibres en bloc (24) ou en direction de la couche centrale (26), lorsque la seconde couche de fibres (22) est agencée sur la couche de fibres en bloc (24) ou la couche centrale (26), dans lequel en particulier le biseau (22a, 22b) de la seconde couche de fibres (22) élargie se trouve dans un côté intérieur de la membrure de bord de fuite (10) fabriquée.
